# EUROPÄISCHE PATENTANMELDUNG

(11) **EP 1 947 295 A1**
(43) Veröffentlichungstag der Anmeldung: **23.07.2008**
(21) Anmeldenummer: 07001086.3
(22) Anmeldetag: 18.01.2007
(51) Int. Cl.: F01D 5/18

(54) **Schaufeleinsatzkörper einer Axialturbinenschaufel**

(71) Anmelder: SIEMENS AKTIENGESELLSCHAFT, 80333 München (DE)
(72) Erfinder: Amro, Mahmoud, 13347 Berlin (DE); Buchal, Tobias, 40489 Düsseldorf (DE); Eßer, Winfried, 44805 Bochum (DE); Grundei, Daniel, 47226 Duisburg (DE); Hase, Matthias, 45470 Mühlheim and der Ruhr (DE); Hülsmeier, Patricia, 45276 Essen (DE); Küperkoch, Rudolf, 45219 Essen (DE); Matthias, Torsten, 45481 Mühlheim an der Ruhr (DE); Menke, Christian, 45329 Essen (DE); Thermann, Hans, 40235 Düsseldorf (DE)

(57) **Zusammenfassung**

Ein Schaufeleinsatzkörper ist derart eingerichtet, dass er in einen Konvektionskühlkanal (16) einer konvektionsgekühlten Schaufel (10) einer Strömungsmaschine einsetzbar ist und den Querschnitt des Konvektionskühlkanals (16) verengt, so dass die Kühleffektivität des Konvektionskühlkanals (16) verbessert ist, und dass die Strömungsmaschine mit den in den Konvektionskühlkanal (16) der Schaufel (10) eingesetzten Schaufeleinsatzkörper (28) betreibbar ist.

## Beschreibung

Die Erfindung betrifft einen Schaufeleinsatzkörper, der in eine Schaufel einsetzbar ist, insbesondere in eine Axialturboverdichterschaufel oder eine Axialturbinenschaufel, und eine Axialturbinenlaufschaufel bzw. eine Axialturbinenleitschaufel, in die der Schaufeleinsatzkörper eingesetzt ist.

Eine Schaufel, insbesondere eine Laufschaufel oder Leitschaufel in einer Axialturbine, die in einer Gasturbine Verwendung findet, ist mechanischen und thermischen Lasten während des Betriebs der Turbine ausgesetzt. Die thermischen und die mechanischen Lasten werden in erster Linie verursacht durch Heißgas, das aus einer Brennkammer der Gasturbine in die Turbine strömt, die Schaufel aufheizt und Kräfte auf die Schaufel ausübt.

Da die Schaufel den hohen thermischen und mechanischen Lasten ausgesetzt ist, sind hohe Anforderungen an die Auslegung und die Konstruktion dieser Schaufel zu stellen.

Ferner ist die Schaufel langen Betriebszeiten ausgesetzt, wodurch deren Lebensdauer herabgesetzt ist. Insbesondere, wenn die Schaufel einer hohen Temperatur in Kombination mit einer hohen mechanischen Spannung eine übermäßig lange Zeit ausgesetzt ist, kann Kriechen der Schaufel auftreten, das zu Rissen in dem Schaufelmaterial und schließlich zum mechanischen Versagen der Schaufel führen kann.

Die Haltbarkeit des Schaufelmaterials ist abhängig von den darauf einwirkenden Spannungen während des Betriebs, der Betriebstemperatur und der Betriebsdauer. Um die Lebensdauer der Schaufel zu verbessern ist es bekannt, die Temperatur der Heißgasströmung zu reduzieren.

Jedoch führt im Allgemeinen eine Absenkung des Temperaturniveaus des Heißgases in der Turbine zu einer Absenkung des thermodynamischen Wirkungsgrads der Turbine.

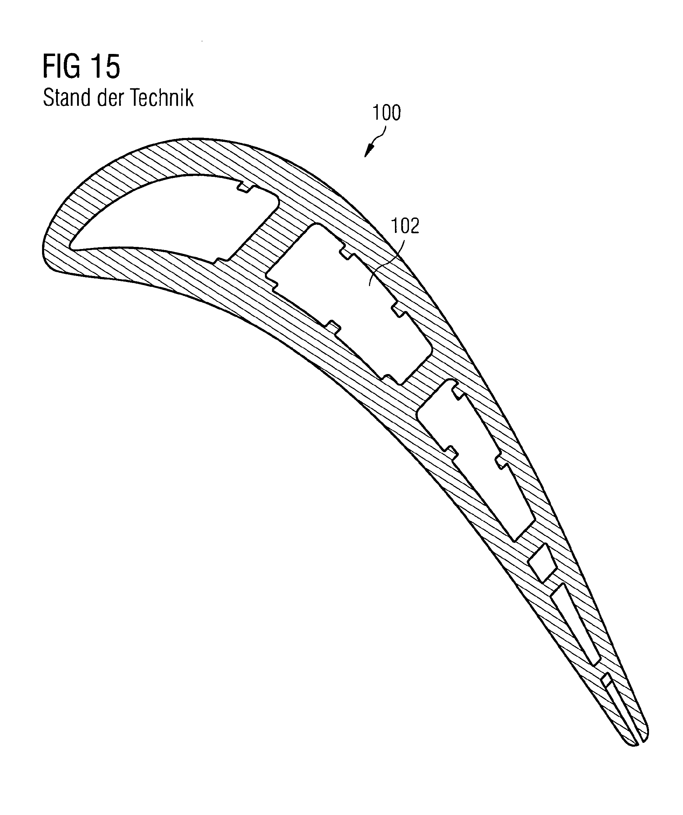

Eine andere Maßnahme, die Lebensdauer der Schaufel zu erhöhen, ist die Kühlung der Schaufel. Hierbei ist eine Konvektionskühlung bekannt, bei der das Innere der Schaufel mit mindestens einem Kühlkanal durchzogen ist, der von einem Kühlmedium, insbesondere Kuhlluft, durchströmt wird. Dabei wird Wärme von der Außenoberfläche der Schaufel durch das Schaufelmaterial hindurch zur Innenoberfläche des Kühlkanals geleitet und von dem Kühlmedium abgeführt. In Fig. 15 ist ein Querschnitt durch die Axialturbinenlaufschaufel 100 mit dem Konvektionskühlkanal 102 gezeigt.

Insbesondere ist für die Axialturbinenleitschaufel die Prallkühlung als Schaufelkühlung bekannt, wobei in einem in der Schaufel ausgebildeten Kühlkanal ein Prallkühlungsblech eingesetzt ist. Das Prallkühlungsblech weist eine Vielzahl von in einem regelmäßigen Muster angeordneten Löchern auf und ist derart gestaltet, dass durch die Löcher das Kühlmedium strömt und auf die Innenoberfläche des Kühlkanals im rechten Winkel auftrifft.

Die Kühlluft wird bei der Gasturbine in der Regel von dem Verdichter abgezapft. Ferner wird in der Regel die verbrauchte Kühlluft in die Turbinenhauptströmung eingeleitet. Somit wird, hervorgerufen durch die Entnahme der Kühlluft, der Wirkungsgrad des Gesamtturbinenprozesses herabgesetzt.

Aufgabe der Erfindung ist es eine Maßnahme bereitzustellen, mit der der Verbrauch an Kühlmedium einer konvektionsgekühlten Schaufel einer Strömungsmaschine gering ist.

Erfindungsgemäß wird ein Schaufeleinsatzkörper bereitgestellt, der derart eingerichtet ist, dass er in einem Konvektionskühlkanal einer konvektionsgekühlten Schaufel einer Strömungsmaschine einsetzbar ist und den Querschnitt des Konvektionskühlkanals signifikant verengt, so dass die Kühleffektivität des Konvektionskühlkanals gegenüber einem unblockierten Konvektionskühlkanals verbessert ist, und dass die Strömungsmaschine mit den in dem Konvektionskühlkanal der Schaufel eingesetzten Schaufeleinsatzkörper betreibbar ist.

Ferner ist erfindungsgemäß eine Axialturbinenlaufschaufel oder eine Axialturbinenleitschaufel mit dem erfindungsgemäßen Schaufeleinsatzkörper versehen.

Der Konvektionskühlkanal der Schaufel hat konstruktions- und fertigungsbedingt einen vorgegebenen Querschnitt, durch den zur Kühlung der Schaufel ein vorherbestimmter Durchsatz an Kühlmedium strömbar ist, um eine ausreichende Kühlung der Schaufel bereitzustellen. Ist der Schaufeleinsatzkörper in den Konvektionskühlkanal eingesetzt, so ist der effektive, durchströmbare Querschnitt wesentlich verengt, verglichen mit dem Konvektionskühlkanal ohne den Schaufeleinsatzkörper. Strömt dieser vorherbestimmte Durchsatz an Kühlmedium durch den Konvektionskühlkanal, in den der Schaufeleinsatzkörper eingesetzt ist, so ist aufgrund der Verengung des Querschnitts des Konvektionskühlkanals durch den Schaufeleinsatzkörper die mittlere Strömungsgeschwindigkeit im Konvektionskühlkanal erhöht. Dadurch ist der Wärmeübergang von dem Schaufelmaterial an der Innenwand des Konvektionskühlkanals zu dem Kühlmedium verbessert, wodurch zum Bereitstellen der notwendigen Kühlleistung ein geringerer Durchsatz an Kühlmedium ausreichend ist. Somit ist mit dem Einsetzen des Schaufeleinsatzkörpers in den Konvektionskühlkanal der Schaufel der zur ausreichenden Kühlung der Schaufel notwendige Durchsatz an Kühlmedium reduziert.

Des Weiteren weist die Strömung an Kühlmedium in dem Konvektionskühlkanal aufgrund ihrer hohen mittleren Strömungsgeschwindigkeit einen hohen Turbulenzgrad auf, wodurch zusätzlich der Wärmeübergang an der Innenoberfläche des Konvektionskühlkanals von dem Schaufelmaterial auf das Kühlmedium verbessert ist.

Dadurch, dass durch das Einsetzen des Schaufeleinsatzkörpers in den Konvektionskühlkanal der Schaufel diese effektiver gekühlt werden kann, ist es ausreichend, wenn die Schaufel aus einem Werkstoff gefertigt ist, der eine geringere Temperaturbeständigkeit aufweist, verglichen mit dem Werkstoff einer Schaufel, in deren Konvektionskühlkanal kein Schaufeleinsatzkörper eingesetzt ist. Somit sind die Materialkosten für die Schaufel mit dem Schaufeleinsatzkörper reduziert.

Der erfindungsgemäße Schaufeleinsatzkörper kann entweder in neu hergestellten oder in bereits in Betrieb befindlichen Schaufeln angewendet werden. Bei bereits in Betrieb befindlichen Schaufeln kann der Einsatz des Schaufeleinsatzkörpers beispielsweise im Rahmen einer Wartungs- oder Instandsetzungsmaßnahme durchgeführt werden. Dadurch kann die Kühleffektivität dieser Schaufeln nachträglich verbessert werden. Dadurch können die Schaufeln einer Gasturbine, die bereits in Betrieb genommen ist, nachträglich mit dem Schaufeleinsatzkörper aufgerüstet werden. Somit kann der Kühlmediumverbrauch der Gasturbine verringert und deren thermischer Wirkungsgrad gesteigert werden.

Bevorzugt ist die Schaufel eine Axialturboverdichterschaufel oder eine Axialturbinenschaufel, deren Konvektionskühlkanal radial sich erstreckt.

Ferner ist es bevorzugt, dass der Schaufeleinsatzkörper an die Innenkontur des Konvektionskühlkanals derart angepasst ist, dass der Schaufeleinsatzkörper, wenn er in den Konvektionskühlkanal eingesetzt ist, in einem Profilschnitt der Schaufel an mindestens zwei Abstützstellen an dem Konvektionskühlkanal abgestützt ist.

Dadurch ist der Schaufeleinsatzkörper fest in den Konvektionskühlkanal einsetzbar, so dass der Schaufeleinsatzkörper bei Rotation der Schaufel in einer Turbomaschine in dem Konvektionskühlkanal fest festgelegt ist. Somit ist es unterbunden, dass der Schaufeleinsatzkörper im Konvektionskühlkanal eine unerwünschte Lage einnimmt, wodurch eine Unwucht an einem Rotor, an den die Schaufel angebaut ist, unterbunden ist.

Bevorzugt ist der Schaufeleinsatzkörper derart geformt, dass, wenn er in den Konvektionskühlkanal eingesetzt ist, den Konvektionskühlkanal zwischen den Abstützstellen überbrückt, so dass über die gesamte Länge des Konvektionskühlkanals dieser in mehrere parallel zueinander verlaufende Unterkanäle unterteilt ist.

Dadurch besteht vorteilhaft die Möglichkeit, die Querschnitte der Unterkanäle derart zu dimensionieren, dass die in den jeweiligen Unterkanälen individuell vorherrschenden mittleren Strömungsgeschwindigkeiten vorherbestimmt werden können. Die vorherbestimmten Strömungsgeschwindigkeiten und die durch die Unterkanäle strömenden Kühlmediumdurchsätze können auf die Wärmeleistung abgestimmt werden, die bezüglich des betroffenen Schaufelmaterialabschnitts notwendig zu erbringen ist, damit die Schaufel optimal gekühlt wird.

Ferner ist es bevorzugt, dass jeder Querschnitt des Schaufeleinsatzkörpers senkrecht zu dessen Längsachse hantelförmig ausgebildet ist, so dass der Schaufeleinsatzkörper im Bereich seiner Längsachse mit geringerer Materialstärke als an den Außenbereichen geformt ist, die mit zwei Abstützstellen zusammen wirken, wenn der Schaufeleinsatzkörper in den Konvektionskühlkanal eingesetzt ist.

Durch die hantelförmige Ausbildung jedes Querschnitts des Schaufeleinsatzkörpers senkrecht zu dessen Längsachse hat der Schaufeleinsatzkörper sowohl eine stabile Gestalt als auch eine gute Passform innerhalb des Konvektionskühlkanals.

An den breiten Außenbereichen des Schaufeleinsatzkörpers berührt dieser die Abstützstellen, so dass die Kontaktfläche an den Abstützstellen von dem Schaufeleinsatzkörper mit dem Schaufelmaterial groß ist. Dadurch ist eine gute Wärmeleitung von dem Schaufelmaterial zu dem Schaufeleinsatzkörper bereitgestellt, so dass im Betrieb der Schaufel der Schaufeleinsatzkörper von dem Schaufelmaterial erwärmt wird. Da das Kühlmedium, das durch die Unterkanäle strömt, mit der Oberfläche des Schaufeleinsatzkörpers in Kontakt steht, findet eine Wärmeübertragung von dem Schaufeleinsatzkörper zu dem Kühlmedium statt. Durch diese Vergrößerung der kühlbaren Oberfläche wird die Schaufel sowohl direkt an der Innenseite des Konvektionskühlkanals als auch via den Schaufeleinsatzkörper gekühlt. Somit ist die Kühleffektivität der Schaufel groß, wodurch der die notwendige Kühlleistung erreichende Kühlmediumdurchsatz gering ist.

Bevorzugt sind die eine Abstützstelle saugseitig und die andere Abstützstelle druckseitig oder die beiden Abstützstellen entlang der Schaufelsehne angesiedelt.

Sind die Abstützstellen saug- bzw. druckseitig angeordnet, so wird vorteilhaft von der Saug- bzw. der Druckseite der Schaufel Wärme in das Innere des Konvektionskühlkanals via den Schaufeleinsatzkörper zum Abtransport von dem Kühlmedium geleitet. Ferner, sind alternativ die Abstützstellen entlang der Schaufelsehne angeordnet, so sind sowohl saugseitig als auch druckseitig an der Innenseite des Konvektionskühlkanals die Unterkanäle ausgebildet, so dass sowohl die Saugseite als auch die Druckseite von je einem Kühlmediumstrom durch den jeweiligen Unterkanal gekühlt werden.

Alternativ ist es bevorzugt, dass der Schaufeleinsatzkörper einen Kernabschnitt, der entlang der Längsachse des Schaufeleinsatzkörpers sich erstreckt, und wenigstens zwei Längsrippen aufweist, die an der Oberfläche des Kernabschnitts in Längsrichtung des Schaufeleinsatzkörpers sich erstrecken und von dem Kernabschnitt vorstehen, so dass, wenn der Schaufeleinsatzkörper in den Konvektionskühlkanal eingesetzt ist, die freien Enden der Längsrippen an den Abstützstellen den Schaufeleinsatzkörper in dem Konvektionskühlkanal abstützen und zwischen den Längsrippen voneinander ggf. fluiddicht abgegrenzte Unterkanäle bilden.

Der Kernabschnitt und die Längsrippen können geometrisch individuell ausgebildet sein, so dass der Schaufeleinsatzkörper individuell an den Konvektionskühlkanal, in den er eingesetzt werden soll, angepasst sein kann.

Ferner ist es bevorzugt, dass die Längsrippen aus einem Formgedächtnismaterial ausgebildet sind und der Kernabschnitt an seiner Oberfläche Aussparungen aufweist, in denen die Längsrippen im Kaltzustand des Formgedächtnismaterials untergebracht sind, wobei das Formgedächtnismaterial derart eingerichtet ist, dass es im Warmzustand den Schaufeleinsatzkörper unter Zusammenwirken mit den Abstützstellen in dem Konvektionskühlkanal abstützen.

Im Kaltzustand sind die Längsrippen in den Aussparungen versenkt, so dass der Außendurchmesser des Schaufeleinsatzkörpers hauptsächlich von dem Kernabschnitt gebildet ist, so dass der Schaufeleinsatzkörper leicht in den Konvektionskühlkanal einsetzbar ist. Ist die den Konvektionskühlkanal aufweisende Schaufel in Betrieb, so wird sie von Heißgasströmen an ihrer Außenoberfläche aufgeheizt, so dass nach Wärmeübertragung von der Außenoberfläche der Schaufel in den Konvektionskühlkanal der Schaufeleinsatzkörper erwärmt wird. Dadurch erwärmen sich die Längsrippen des Schaufeleinsatzkörpers, so dass diese im Warmzustand sind. Dadurch, dass die Längsrippen aus dem Formgedächtnismaterial geformt sind, nehmen die Längsrippen eine Gestalt ein, bei der der Schaufeleinsatzkörper an den Abstützstellen in den Konvektionskühlkanal abgestützt ist. Dadurch ist im Warmzustand der Schaufeleinsatzkörper stabil in dem Konvektionskühlkanal untergebracht.

Bevorzugt hat der Kernabschnitt einen kreisförmigen oder einen rechteckigen Querschnitt.

Entsprechend dieser Auswahl kann der Schaufeleinsatzkörper vorteilhaft angepasst an den Konvektionskühlkanal ausgebildet sein, in den der Schaufeleinsatzkörper eingesetzt werden soll.

Bevorzugt sind die Abstützstellen auf als Turbulatoren ausgebildeten Vorsprüngen angeordnet, die an der Innenoberfläche des Konvektionskühlkanals vorstehen.

Dadurch sind die Abstützstellen exponiert an der Innenoberfläche des Konvektionskühlkanals angeordnet, so dass der Schaufeleinsatzkörper leicht in dem Konvektionskühlkanal abstützbar ist.

Alternativ ist es bevorzugt, dass der Schaufeleinsatzkörper einen Kernabschnitt, der entlang der Längsachse des Schaufeleinsatzkörpers sich erstreckt, und wenigstens zwei Querrippen aufweist, die an dem Kernabschnitt senkrecht zu dessen Längsachse sich erstreckend angeordnet sind und von dem Kernabschnitt vorstehen, so dass, wenn der Schaufeleinsatzkörper in den Konvektionskühlkanal eingesetzt ist, die freien Enden der Querrippen an den Abstützstellen den Schaufeleinsatzkörper in dem Konvektionskühlkanal abstützen.

Der Schaufeleinsatzkörper ist somit an den Querrippen abgestützt, wodurch zwischen den Querrippen eine kühlmediumdurchlässige Verbindung zwischen den von dem Schaufeleinsatzkörper ausgebildeten Unterkanälen bestehen bleibt. Dadurch kann das Kühlmedium von dem einen Unterkanal in den anderen Unterkanal gelangen, wodurch eine hohe Verwirbelung innerhalb der Kühlmediumströmung sich einstellt. Dadurch ist die Wärmeübertragung an der Innenoberfläche des Konvektionskühlkanals erhöht, wodurch der Durchsatz des Kühlmediums zum Erreichen einer bestimmen Kühlleistung reduziert ist.

Bevorzugt sind die Querrippen im Querschnitt senkrecht zur Längsachse des Kernabschnitt hantelförmig ausgebildet, so dass die Querrippen im Bereich des Kernabschnitt mit geringerer Materialstärke als in den Außenbereichen geformt sind, die mit zwei Abstützstellen zusammenwirken, wenn der Schaufeleinsatzkörper in den Konvektionskühlkanal eingesetzt ist.

Durch die hantelförmige Ausbildung jeder Querrippe hat der Schaufeleinsatzkörper eine hohe Festigkeit und eine gute Passform innerhalb des Konvektionskühlkanals.

An den breiten Außenbereichen der Querrippen berühren diese die Abstützstellen, so dass die Kontaktflächen an den Abstützstellen groß sind. Dadurch ist eine gute Wärmeleitung von dem Schaufelmaterial zu den Querrippen bereitgestellt. Da das Kühlmedium mit der Oberfläche des Schaufeleinsatzkörpers und der Innenfläche des Konvektionskühlkanals in Kontakt steht, findet eine Wärmeübertragung von der Schaufel via den Schaufeleinsatzkörper zu dem Kühlmedium statt. Dadurch wird die Schaufel sowohl direkt an der Innenseite des Konvektionskühlkanals als auch via den Schaufeleinsatzkörper gekühlt. Somit ist die Kühleffektivität der Schaufel groß, wodurch der eine notwendige Kühlleistung erreichende Kühlmediumdurchsatz gering ist.

Ferner ist es bevorzugt, dass der Schaufeleinsatzkörper aus einem Formgedächtnismaterial ausgebildet ist, das derart eingerichtet ist, dass im Kaltzustand des Formgedächtnismaterials der Schaufeleinsatzkörper einfach in den Konvektionskühlkanal einsetzbar ist, und im Warmzustand des Formgedächtnismaterials der Schaufeleinsatzkörper an den Abstützstellen stabil abgestützt ist.

Dadurch wird vorteilhaft erreicht, dass im Kaltzustand der Schaufeleinsatzkörper leicht in den Konvektionskühlkanal einsetzbar ist und im Warmzustand, wenn der Schaufeleinsatzkörper von der Schaufel erwärmt wurde, stabil den Schaufeleinsatzkörper in dem Konvektionskühlkanal abstützt.

Bevorzugt weist die Axialturbinenleitschaufel einen Prallkühlungseinsatz auf, dessen Innenraum den Konvektionskühlkanal definiert.

Nachfolgend werden Ausführungsbeispiele eines erfindungsgemäßen Schaufeleinsatzkörpers und ein Ausführungsbeispiel einer erfindungsgemäßen Axialturbinenlaufschaufel anhand der beigefügten schematischen Zeichnungen näher erläutert. Es zeigen:
- Fig. 1: einen Profilschnitt eines Ausführungsbeispiels der erfindungsgemäßen Axialturbinenlaufschaufel,
- Fig. 2: eine Seitenansicht eines ersten Ausführungsbeispiels des erfindungsgemäßen Schaufeleinsatzkörpers,
- Fig. 3: den Grundriss des ersten Ausführungsbeispiels aus Fig. 2,
- Fig. 4: eine Seitenansicht eines zweiten Ausführungsbeispiels des erfindungsgemäßen Schaufeleinsatzkörpers,
- Fig. 5: den Grundriss des zweiten Ausführungsbeispiels aus Fig. 4,
- Fig. 6, 7: den Grundriss eines dritten Ausführungsbeispiels des erfindungsgemäßen Schaufeleinsatzkörpers,
- Fig. 8: einen Profilschnitt des dritten Ausführungsbeispiels der erfindungsgemäßen Axialturbinenlaufschaufel,
- Fig. 9: den Grundriss eines vierten Ausführungsbeispiels des erfindungsgemäßen Schaufeleinsatzkörpers,
- Fig. 10: einen Profilschnitt des Ausführungsbeispiels der erfindungsgemäßen Axialturbinenlaufschaufel,
- Fig. 11, 12: den Grundriss eines fünften Ausführungsbeispiels des erfindungsgemäßen Schaufeleinsatzkörpers,
- Fig. 13, 14: ein Detail des fünften Ausführungsbeispiels aus Fig. 11 und 12, und
- Fig. 15: einen Profilschnitt einer Axialturbinenleitschaufel nach dem Stand der Technik.

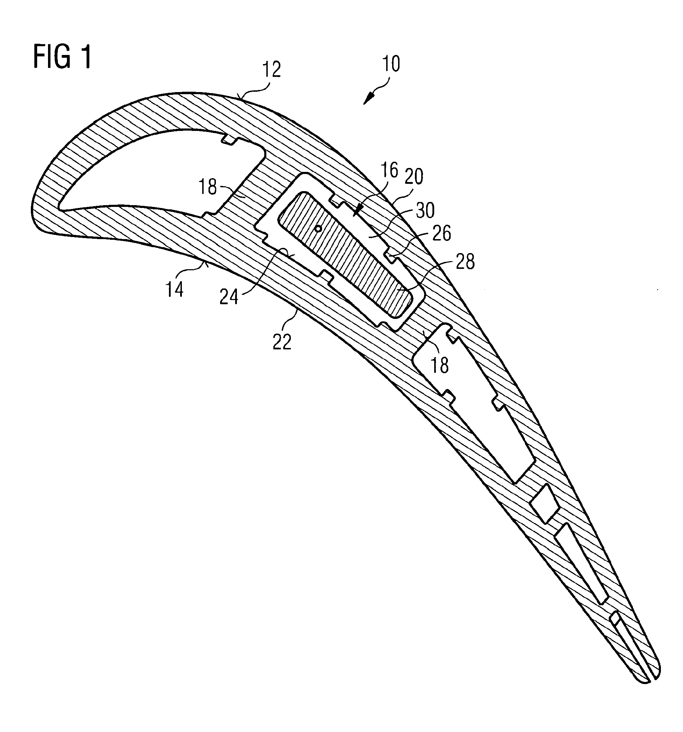

Wie es aus Fig. 1 ersichtlich ist, weist eine Axialturbinenlaufschaufel 10 eine Saugseite 12 und eine Druckseite 14 auf. Die Axialturbinenlaufschaufel 10 weist eine Konvektionsinnenkühlung auf, die von einem entlang der Schaufelachse im Inneren der Schaufel verlaufenden Konvektionskühlkanal 16 gebildet ist. Der Konvektionskühlkanal 16 ist begrenzt von zwei in dem Material der Axialturbinenlaufschaufel 10 ausgebildeten Querwandungen 18, die von der Saugseite 12 zu der Druckseite 14 sich erstrecken, einer im Material der Axialturbinenlaufschaufel 10 ausgebildeten Saugseitenwandung 20 und einer Druckseitenwandung 22, so dass die Innenoberfläche 24 des Konvektionskühlkanals 16 von den Querwandungen 18, der Saugseitenwandung 20 und der Druckseitenwandung 24 definiert ist.

An der Innenoberfläche 24 des Konvektionskühlkanals 16 sind als Vorsprünge Turbulatoren 26 ausgebildet.

Zum Kühlen der Axialturbinenlaufschaufel 10 wird der Konvektionskühlkanal 16 von Kühlluft (nicht gezeigt) durchströmt, die eine niedrigere Temperatur aufweist, als die, die Axialturbinenlaufschaufel 10 im Betrieb hat. Dadurch wird mittels der Kühlluft aufgrund von Wärmeübertragung von der Saugseite 12 bzw. der Druckseite 14 durch die Saugseitenwandung 20 bzw. der Druckseitenwandung 22 zu der Innenoberfläche 24 des Konvektionskühlkanals 16 Wärme von der Kühlluft abtransportiert.

Die Turbulatoren 26 bewirken ein Turbulentmachen und ein Verwirbeln der Kühlluftströmung, wodurch die Wärmeübertragung an der Innenoberfläche 24 des Konvektionskühlkanals 16 verbessert ist.

In den Konvektionskühlkanal 16 ist ein Schaufeleinsatzkörper 28 eingesetzt, der den durchströmbaren Querschnitt des Konvektionskühlkanals 16 auf einen effektiven Querschnitt 30 des Konvektionskühlkanals 16 verkleinert. Dadurch ist die Strömungsgeschwindigkeit bei gleich bleibendem Durchsatz der Kühlluft durch den Konvektionskühlkanal 16 erhöht, wodurch der Wärmeübergang an der Innenoberfläche 24 des Konvektionskühlkanals 16 verbessert ist.

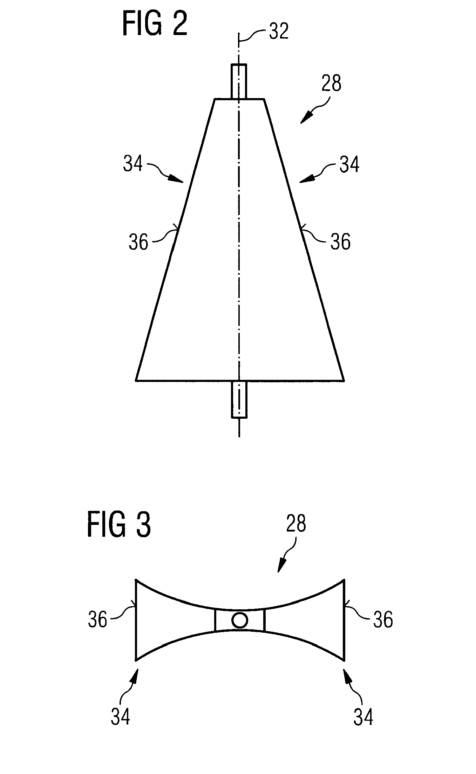

Das in Fig. 2 und 3 gezeigte erste Ausführungsbeispiel des Schaufeleinsatzkörpers 28 ist langgestreckt mit einer Längsachse 32 ausgebildet, die, wenn der Schaufeleinsatzkörper 28 in den Konvektionskühlkanal 16 eingesetzt ist, entlang des Konvektionskühlkanals 16 verläuft.

Das erste Ausführungsbeispiel des Schaufeleinsatzkörpers 28 weist in allen Querschnitten, die senkrecht zu der Längsachse 32 verlaufen, eine hantelförmige Form auf. Die Querschnitte sind axialsymmetrisch zur Längsachse 32 ausgebildet und weisen einen Außenbereich 34 auf, der breiter ausgebildet ist, als der Bereich des Querschnitts, der im Bereich der Längsachse 32 angesiedelt ist. Die Außenbereiche 34 schließen jeweils mit einer Kontaktfläche 36 ab, die, wenn der Schaufeleinsatzkörper 28 in den Konvektionskühlkanal 16 eingesetzt ist, an der Innenoberfläche 24 des Konvektionskühlkanals 16 anliegen. Wahlweise können die Kontaktflächen 36 an den Querwandungen 18 oder an der Saugseitenwandung 20 bzw. der Druckseitenwandung 24 anliegen.

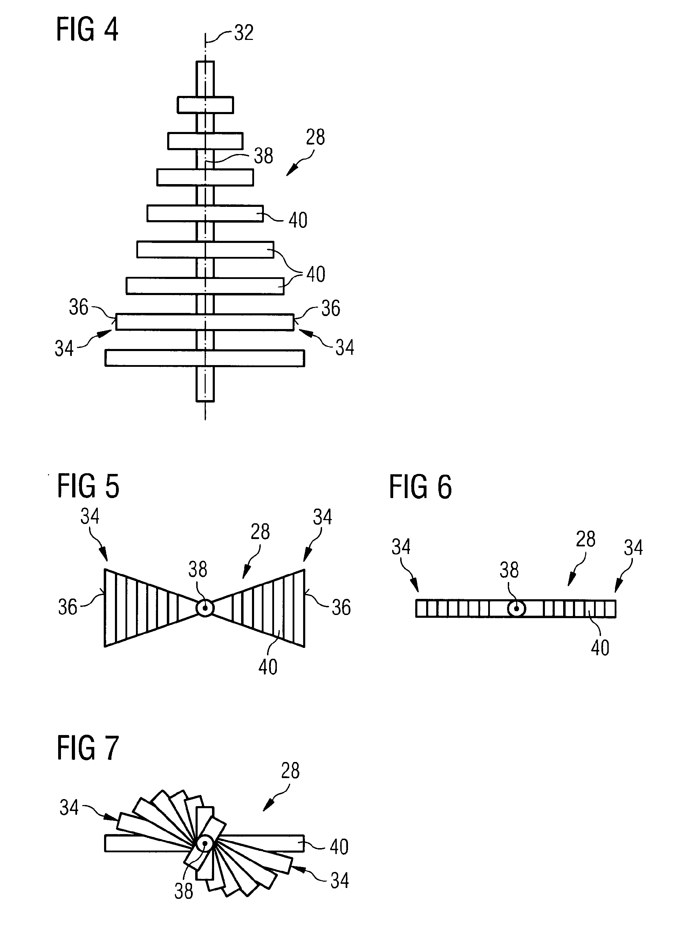

Das in Fig. 4 und 5 gezeigte zweite Ausführungsbeispiel des Schaufeleinsatzkörpers 28 ist ähnlich dem ersten Ausführungsbeispiel ausgebildet. Jedoch weist das zweite Ausführungsbeispiel des Schaufeleinsatzkörpers 28 einen Kernabschnitt 38 auf, der als Zylinder um die Längsachse 32 ausgebildet ist. An dem Kernabschnitt 38 angebracht und im Abstand zueinander entlang der Längsachse 32 geschichtet sind Querrippen 40 vorgesehen. Die Querrippen 40 sind in ihrer Draufsicht hantelförmig ausgebildet und weisen eine Form auf, die ähnlich der senkrecht zu der Längsachse 32 verlaufenden Querschnitte des ersten Ausführungsbeispiels des Schaufeleinsatzkörpers 28 ist.

Alternativ zur Gestalt der Draufsicht der Querrippen 40 des zweiten Ausführungsbeispiels des Schaufeleinsatzkörpers 28 sind die Querrippen 40 gemäß einem dritten Ausführungsbeispiel des Schaufeleinsatzkörpers 28 stabförmig ausgebildet und symmetrisch an dem Kernabschnitt 38 angebracht.

Das dritte Ausführungsbeispiel des Schaufeleinsatzkörpers 28 ist aus Formgedächtnismaterial hergestellt, das derart eingerichtet ist, dass, wie es in Fig. 6 gezeigt ist, die Querrippen 40 in der Draufsicht des dritten Ausführungsbeispiels des Schaufeleinsatzkörpers 28 übereinander fluchtend angeordnet sind. Ferner ist das Formgedächtnismaterial des dritten Ausführungsbeispiels des Schaufeleinsatzkörpers 28 derart eingereichtet, dass sich die Querrippen 40 um den Kernabschnitt 38 in einer Ebene senkrecht zur Längsachse 32 verschwenken, so dass das dritte Ausführungsbeispiel des Schaufeleinsatzkörpers 28, wenn es in den Konvektionskühlkanal 16 eingesetzt ist, sich in diesem fest verspreizt.

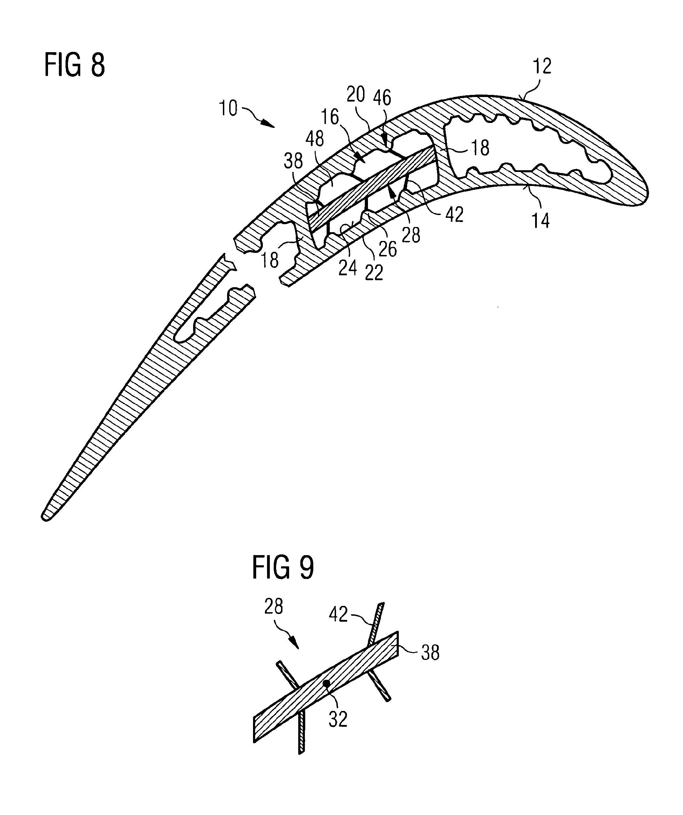

Gemäß einem vierten Ausführungsbeispiel des Schaufeleinsatzkörpers 28 weist dieser den Kernabschnitt 38 und mehrere Längsrippen 42 auf, die an der Oberfläche von dem Kernabschnitt 38 sich erstreckend und parallel zur Längsachse 32 verlaufend angeordnet sind (siehe Fig. 9). Die Längsrippen 42 sind aus einem elastischen Material, das derart eingerichtet ist, dass, wenn das vierte Ausführungsbeispiel des Schaufeleinsatzkörpers 28 in den Konvektionskühlkanal 16 der Axialturbinenlaufschaufel 10 eingesetzt ist, wie es in Fig. 8 gezeigt ist, sich derart an die Innenoberfläche 24 des Konvektionskühlkanals 16 legen, dass das vierte Ausführungsbeispiel des Schaufeleinsatzkörpers 28 in dem Konvektionskühlkanal 16 stabil abgestützt ist.

Zwischen den Längsrippen 42, einem entsprechenden Abschnitt der Innenoberfläche 24 des Konvektionskühlkanals 16 und einem entsprechenden Oberflächenabschnitt des Kernabschnitts 38 ist ein Unterkanal 48 ausgebildet.

Die Längsrippen 42 liegen jeweils an einer Abstützstelle 46 an der Innenoberfläche 24 des Konvektionskühlkanals 16 an, wobei die Längsrippen 42 und die Abstützstellen 46 derart ausgebildet sind, dass sie über die gesamte Länge der Querrippen 40 in fluiddichtem Kontakt stehen. Dadurch ist es unterbunden, dass die Kühlluft, die durch die Unterkanäle 48 strömt, zwischen den Unterkanälen 48 ausgetauscht wird.

Wie es in Fig. 8 ersichtlich ist, sind die Abstützstellen 46 auf den Turbulatoren 26 angesiedelt, so dass die Längsrippen 42 an den Turbulatoren 26 anliegen.

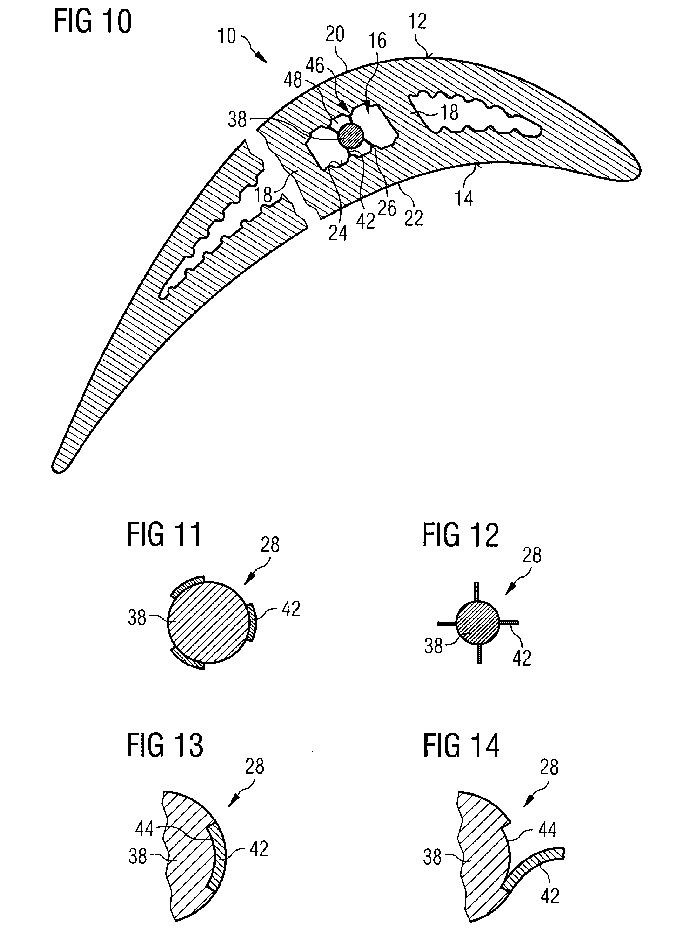

Wie es aus Fig. 10 bis 14 ersichtlich ist, weist das fünfte Ausführungsbeispiel des Schaufeleinsatzkörpers 28 einen Kernabschnitt 38 mit einem kreisförmigen Querschnitt auf. An der Umfangsoberfläche des Kernabschnitts 38 sind die Längsrippen 42 angeordnet.

Die Längsrippen 42 sind aus einem Formgedächtnismaterial hergestellt, das derart eingerichtet ist, dass im Kaltzustand die Längsrippen 42 an der Oberfläche des Kernabschnitts 38 anliegen und im Warmzustand die Längsrippen 42 von der Oberfläche des Kernabschnitts 38 vorstehen.

In der Oberfläche des Kernabschnitts 38 sind Aussparungen 44 vorgesehen, in denen jeweils eine der Längsrippen 42 im Kaltzustand untergebracht ist. Die Längsrippe 42 ist mit ihrem einen Längsende in der Aussparung 44 derart befestigt und die Aussparung 44 ist derart dimensioniert, dass im Kaltzustand die Längsrippe 42 vollständig in der Aussparung 44 versenkt angeordnet ist. Im Warmzustand spreizt sich die Längsrippe aus der Aussparung 44 heraus und steht von den Kernabschnitt 38 ab.

Ist das fünfte Ausführungsbeispiel des Schaufeleinsatzkörpers 28 in den Konvektionskühlkanal 16 der Axialturbinenlaufschaufel 10 eingesetzt, so bilden die Längsrippen 42 auf den Turbulatoren 26 die Abstützstellen 46 aus. Ferner kann die Abstützstelle 46 in Führungsrillen (nicht gezeigt) liegen, die in der Innenoberfläche 24 des Konvektionskühlkanals 16 eingebracht sind, in die die Längsrippen 42 mit ihren freien Enden eingreifen.

Der Schaufeleinsatzkörper 28 ist aus einem Material oder mehreren Materialen gefertigt, mit denen der Betrieb der Axialturbinenlaufschaufel 10, die in eine Axialturbine eingebaut ist, in für die Axialturbine vorgesehenen Betriebsbereichen betreibbar ist. Somit sind für den Schaufeleinsatzkörper 28 temperaturbeständige Materialien vorgesehen, wie beispielsweise Titan.

Der Schaufeleinsatzkörper 28 ist bezüglich anderen Schaufeleinsatzkörpern 28, die in einer Vielzahl von Axialturbinenlaufschaufeln 10 eines Axialturbinenrotors eingesetzt sind, hinsichtlich Unwucht und Schwingungsverhalten des Rotors optimiert ausgelegt.

## Patentansprüche

1. Schaufeleinsatzkörper (28),
der derart eingerichtet ist, dass er in einen Konvektionskühlkanal (16) einer konvektionsgekühlten Schaufel (10) einer Strömungsmaschine einsetzbar ist und den Querschnitt des Konvektionskühlkanals (16) verengt,
so dass die Kühleffektivität des Konvektionskühlkanals (16) verbessert ist, und
dass die Strömungsmaschine mit dem in den Konvektionskühlkanal (16) der Schaufel (10) eingesetzten Schaufeleinsatzkörper (28) betreibbar ist.

2. Schaufeleinsatzkörper gemäß Anspruch 1,
der in eine Axialturboverdichterschaufel oder eine Axialturbinenschaufel einsteckbar ist,
wobei deren Konvektionskühlkanal (16) radial sich erstreckt.

3. Schaufeleinsatzkörper gemäß Anspruch 2,
wobei der Schaufeleinsatzkörper (28) an die Innenkontur des Konvektionskühlkanals (16) derart angepasst ist, dass der Schaufeleinsatzkörper (28), wenn er in den Konvektionskühlkanal (16) eingesetzt ist, in einem Profilschnitt der Schaufel (10) an mindestens zwei Abstützstellen (46) an dem Konvektionskühlkanal (16) abgestützt ist.

4. Schaufeleinsatzkörper gemäß Anspruch 3,
wobei der Schaufeleinsatzkörper (28) derart geformt ist, dass, wenn er in den Konvektionskühlkanal (16) eingesetzt ist, den Konvektionskühlkanal (16) zwischen den Abstützstellen (46) überbrückt, so dass über die gesamte Länge des Konvektionskühlkanals (16) dieser in mehrere parallel zueinander verlaufende Unterkanäle (48) unterteilt ist.

5. Schaufeleinsatzkörper gemäß Anspruch 3 oder 4,
wobei jeder Querschnitt des Schaufeleinsatzkörpers (28) senkrecht zu dessen Längsachse (32) hantelförmig ausgebildet ist,
so dass der Schaufeleinsatzkörper (28) im Bereich seiner Längsachse (32) mit geringerer Materialstärke als an den Außenbereichen (34) geformt ist, die mit zwei Abstützstellen (46) zusammenwirken, wenn der Schaufeleinsatzkörper (28) in den Konvektionskühlkanal (16) eingesetzt ist.

6. Schaufeleinsatzkörper gemäß Anspruch 5,
wobei die eine Abstützstelle (46) saugseitig und die andere Abstützstelle (46) druckseitig oder die beiden Abstützstellen (46) entlang der Schaufelsehne angesiedelt sind.

7. Schaufeleinsatzkörper gemäß Anspruch 3 oder 4,
wobei der Schaufeleinsatzkörper (28) einen Kernabschnitt (38), der entlang der Längsachse (32) des Schaufeleinsatzkörpers (28) sich erstreckt und wenigstens zwei Längsrippen (42) aufweist, die an der Oberfläche des Kernabschnitts (38) in Längsrichtung des Schaufeleinsatzkörpers (28) sich erstrecken und von dem Kernabschnitt (38) vorstehen,
so dass, wenn der Schaufeleinsatzkörper (28) in den Konvektionskühlkanal (16) eingesetzt ist, die freien Enden der Längsrippen (42) an den Abstützstellen (46) den Schaufeleinsatzkörper (28) in dem Konvektionskühlkanal (16) abstützen und zwischen den Längsrippen (42) voneinander abgetrennte Unterkanäle (48) bilden.

8. Schaufeleinsatzkörper gemäß Anspruch 7,
wobei die Längsrippen (42) aus einem Formgedächtnismaterial ausgebildet sind und der Kernabschnitt (38) an seiner Oberfläche Aussparungen (44) aufweist, in denen die Längsrippen (42) im Kaltzustand des Formgedächtnismaterials untergebracht sind,
wobei das Formgedächtnismaterial derart eingerichtet ist, dass es im Warmzustand den Schaufeleinsatzkörper (28) unter zusammenwirken mit den Abstützstellen (46) in dem Konvektionskühlkanal (16) abstützt.

9. Schaufeleinsatzkörper gemäß Anspruch 7 oder 8,
wobei der Kernabschnitt (38) einen kreisförmigen oder einen rechteckigen Querschnitt hat.

10. Schaufeleinsatzkörper gemäß einem der Ansprüche 7 bis 9,
wobei die Abstützstellen (46) auf als Turbulatoren (26) ausgebildeten Vorsprüngen angeordnet sind, die an der Innenoberfläche (24) des Konvektionskühlkanals (16) vorstehen.

11. Schaufeleinsatzkörper gemäß Anspruch 4,
wobei der Schaufeleinsatzkörper (28) einen Kernabschnitt (38), der entlang der Längsachse (32) des Schaufeleinsatzkörpers (28) sich erstreckt und wenigstens zwei Querrippen (40) aufweist, die an dem Kernabschnitt (38) senkrecht zu dessen Längsachse (32) sich erstreckend angeordnet sind und von dem Kernabschnitt (38) vorstehen,
so dass, wenn der Schaufeleinsatzkörper (28) in den Konvektionskühlkanal (16) eingesetzt ist, die freien Enden der Querrippen (40) an den Abstützstellen den Schaufeleinsatzkörper (28) in dem Konvektionskühlkanal (16) abstützen.

12. Schaufeleinsatzkörper gemäß Anspruch 11,
wobei die Querrippen (40) im Querschnitt senkrecht zur Längsachse (32) des Kernabschnitts (38) hantelförmig ausgebildet sind,
so dass die Querrippen (40) im Bereich des Kernabschnitts (38) mit geringerer Materialstärke als in den Außenbereichen (34) geformt sind, die mit zwei Abstützstellen (46) zusammenwirken, wenn der Schaufeleinsatzkörper (28) in den Konvektionskühlkanal (16) eingesetzt ist.

13. Schaufeleinsatzkörper gemäß Anspruch 11 oder 12,
wobei der Schaufeleinsatzkörper (28) aus einem Formgedächtnismaterial ausgebildet ist, das derart eingerichtet ist, dass im Kaltzustand des Formgedächtnismaterials der Schaufeleinsatzkörper (28) einfach in den Konvektionskühlkanal (16) einsetzbar ist und im Warmzustand des Formgedächtnismaterials der Schaufeleinsatzkörper (28) an den Abstützstellen (46) stabil abgestützt ist.

14. Axialturbinenlaufschaufel mit einem Schaufeleinsatzkörper (28) nach einem der Ansprüche 1 bis 13.

15. Axialturbinenleitschaufel mit einem Schaufeleinsatzkörper (28) nach einem der Ansprüche 1 bis 13.

16. Axialturbinenleitschaufel gemäß Anspruch 15,
wobei die Axialturbinenleitschaufel einen Prallkühlungseinsatz aufweist, dessen Innenraum den Konvektionskühlkanal (16) definiert.
